(19) Europäisches Patentamt
European Patent Office
Office européen des brevets

(11) **EP 3 323 002 B1**

(12) **EUROPEAN PATENT SPECIFICATION**

(45) Date of publication and mention
of the grant of the patent:
**12.08.2020 Bulletin 2020/33**

(51) Int Cl.:
***G06T 7/11*** *(2017.01)*

(21) Application number: **15898466.6**

(22) Date of filing: **23.09.2015**

(86) International application number:
**PCT/US2015/051716**

(87) International publication number:
**WO 2017/011022 (19.01.2017 Gazette 2017/03)**

(54) **METHOD AND SYSTEM FOR DETECTION OF CONTRABAND NARCOTICS IN HUMAN DIGESTIVE TRACT**

VERFAHREN UND SYSTEM ZUM NACHWEIS VON DROGENSCHMUGGELWARE IM MENSCHLICHEN VERDAUUNGSTRAKT

PROCÉDÉ ET SYSTÈME POUR LA DÉTECTION DE NARCOTIQUES DE CONTREBANDE DANS LE TRACTUS DIGESTIF HUMAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2015 US 201514798926**

(43) Date of publication of application:
**23.05.2018 Bulletin 2018/21**

(73) Proprietor: **Adani Systems, Inc.**
**Alexandria, VA 22314 (US)**

(72) Inventors:
• **PIATROU, Vadzim A.**
**Alexandria, VA 22314 (US)**
• **LINEV, Vladimir N.**
**Alexandria, VA 22314 (US)**

(74) Representative: **Roberts, Peter David**
**Marks & Clerk LLP**
**1 New York Street**
**Manchester M1 4HD (GB)**

(56) References cited:
**WO-A1-2005/085907       WO-A1-2012/119216**
**WO-A1-2012/119216       CN-A- 101 034 071**
**US-A1- 2003 216 631       US-A1- 2012 268 272**

**US-A1- 2013 136 231**

• **BULAKCI MESUT ET AL: "Comparison of diagnostic value of multidetector computed tomography and X-ray in the detection of body packing", EUROPEAN JOURNAL OF RADIOLOGY, ELSEVIER SCIENCE, NL, vol. 82, no. 8, 26 January 2013 (2013-01-26), pages 1248-1254, XP028573606, ISSN: 0720-048X, DOI: 10.1016/J.EJRAD.2012.12.022**
• **SUZANA AB HAMID ET AL: "Characteristic imaging features of body packers: a pictorial essay", JAPANESE JOURNAL OF RADIOLOGY ; (FORMERLY: RADIATION MEDICINE), SPRINGER JAPAN, JAPAN, vol. 30, no. 5, 14 March 2012 (2012-03-14) , pages 386-392, XP035093113, ISSN: 1867-108X, DOI: 10.1007/S11604-012-0069-4**
• **BERGER FERCO H ET AL: "Body packing: a review of general background, clinical and imaging aspects", RADIOLOGIA MEDICA, SPRINGER ITALIA SRL, IT, vol. 120, no. 1, 10 October 2014 (2014-10-10), pages 118-132, XP035432957, ISSN: 0033-8362, DOI: 10.1007/S11547-014-0458-0 [retrieved on 2014-10-10]**

EP 3 323 002 B1

- **FLACH PATRICIA M ET AL: "Drug mules as a radiological challenge: Sensitivity and specificity in identifying internal cocaine in body packers, body pushers and body stuffers by computed tomography, plain radiography and Lodox", EUROPEAN JOURNAL OF RADIOLOGY, vol. 81, no. 10, 31 October 2012 (2012-10-31), pages 2518-2526, XP028935393, ISSN: 0720-048X, DOI: 10.1016/J.EJRAD.2011.11.025**

**Description**

Background of the Invention

Field of the Invention

The present invention relates to airport and prison security scanners, and more particularly, to a system for detection of illegal substances/narcotics smuggled inside internal cavities of a passenger or visitor to a secure facility.

Description of the Related Art

Currently, security systems at airports, secure facilities and other public areas use microwave or X-ray scanners with penetrating or reflected radiation. These scanners are used for scanning passengers (for example) and detecting prohibited or illegal objects located on a body of the passenger or inside the passenger without a manual pat down or search. A conventional scanner displays objects on an operator's screen and the operator has to perform a visual review of the screen images and to make a decision on whether to allow a person through or to perform additional manual search or scanning. However, this conventional approach is somewhat slow, inefficient and is heavily dependent on the operator who can get tired by the end of his shift, and make wrong decisions and miss some objects on the screen. Therefore, a method for automated analysis and detection of prohibited objects and illegal substances is needed.

Existing systems and methods are inefficient for detection of narcotics being smuggled inside person's stomach. US Patent No. 8,437,556 describes shape-based object detection and localization system. The separate objects are segmented on an image and are classified based on geometrical parameters and apperance similiarity to suspected objects. This method cannot be used for detection of drugs located inside the stomach cavity, because the images cannot be segmeneted due to a low contrast of the drug filled packets with the surrounding area of the stomach. In other words, these packets cannot always be reliably distinguished on the image without considerable manual effort.

US Patent Publication No. 20150010128 discloses a method for finding liquids inside the laggage. The proposed method uses segments of the objects and uses their atomic number acquired by dual-energy method. However, this approach cannot be used for detection of drugs located inside the stomach. An automated method for detection of hidden objects using microwave scanners is described by US Patent No. 8,774,461. The proposed method analyses a set of consecutive images of a surface of a human body. However, this method cannot be applied to detection of drugs located inside a human body, because the method is based on detection of humps and valleys on a image of a surface of a human body.

Another automated detection method is dislosed in publication by Mery, D., Automated Detection of Welding Discontinuities without Segmentation, Materials Evaluation, p. 657-663 (2011). This method detects welding defects by a sliding window method. However, the stomach area has many abnormalities and produces visual noise, which does not provide reliable information without additional filtering of data provided by the window classifier.

Publication CN 101 034 071 discloses a method wherein radiation source is used to obtain images of a human body in order to detect hidden drugs. Image processing is used to detect and distinguish materials of different atomic numbers, which are then displayed in different colours.

Accordingly, there is a need in the art for an effective method for an automated detection of illegal substances smuggled inside internal cavities of a human being, particularly inside his digestive tract.

Summary of the Invention

The present invention relates to security scanners, such as those at airports and prisons/secure facilities, and more particularly, to a system and method for an automated detection of illegal substances smuggled inside internal cavities of a human being that substantially obviates one or more of the disadvantages of the related art.

In one aspect, there is provided a method for automated detection of illegal substances smuggled inside internal cavities of a passenger. The method provides for an automated detection of drugs hidden in a passenger's stomach area using pictures produced by an X-ray scanner. According to an exemplary embodiment, throughput of the scanner is increased by an automated detection algorithm, which takes less time than visual analysis by an operator. In the exemplary embodiment, the operator is only involved in cases when drugs are detected. The automated detection method has a consistent precision because the effects of tiredness of the operator are eliminated. All data from the image is used including analysis of the private body parts that may not be displayed to the operator. Efficiency and costs of the process are improved, since fewer qualified operators can service several scanners.

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

Brief Description of the Attached Figures

The accompanying drawings, which are included to provide a further understanding of the invention and are incorporated in and constitute a part of this specification, illustrate embodiments of the invention and together with the description serve to explain the principles of the invention.

In the drawings:

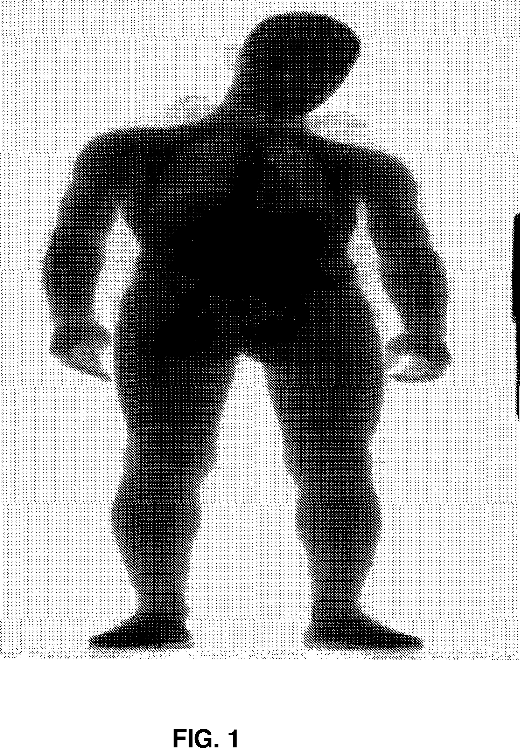

FIG. 1 illustrates an exemplary image that can processed by the drug detection method;
FIG. 2 illustrates an example for detection of the upper body and determination of the stomach area;
FIG. 3 illustrates and example of a contrasted image with detected suspicious areas;
FIG. 4 illustrates an algorithm for drug detection, in accordance with the exemplary embodiment;
FIG. 5 illustrates a flow chart for loading a snapshot for analysis and preparing data for subsequent steps of an algorithm;
FIG. 6 illustrates a flow chart for building (or training) a classifier for high-contrast objects;
FIG. 7 illustrates classification of high-contrast objects in a stomach area on new images;
FIG. 8 illustrates an example of segmentation of areas of a scanned image;
FIG. 9 illustrates relative vertical and horizontal coordinates of a center of an area of the stomach;
FIG. 10 illustrates a flowchart for building a classifier for windows with drugs;
FIG. 11 illustrates a flow chart for searching for windows suspected for containing drugs;
FIG. 12 illustrates contrasted areas of the stomach and maps of the same areas shown after elimination of the high-contrast objects;
FIG. 13 illustrates an example of locations of the detection window;
FIG. 14 illustrates an example of calculation of invariant to rotation features for periodicity for coefficients matrix of a size 2 x 2;
FIG. 15 illustrates a flow chart for constructing the image classifier;
FIG. 16 illustrates a flow chart for classifying the image for presence of drugs;
FIG. 17 illustrates position of sub-windows suspected for presence of drugs in a stomach area;
FIG. 18 illustrates a distribution of images based on probability of the image being free of drugs;
FIG. 19 illustrates an example of the transformation function $p(f/f_{max})$ with the parameter $\gamma=0.1$.
FIG. 20 illustrates a dissimilarity histogram.

Detailed Description of Embodiments of the Invention

Reference will now be made in detail to the embodiments of the present invention, examples of which are illustrated in the accompanying drawings.

An algorithm, system and computer program for a method of automated detection of drugs hidden in a passenger's stomach area using pictures produced by an X-ray scanner. According to an exemplary embodiment, throughput capacity of the scanner is increased by an automated detection algorithm, which takes less time than visual analysis by an operator. In the exemplary embodiment, the operator is only involved in cases when drugs are presumed to be detected. The automated detection method has a consistent precision because the effects of tiredness of the operator are eliminated. All data from the image is used, including analysis of the private body parts that might not be displayed to the operator. Efficiency and costs of the process are improved, since fewer qualified operators are required for servicing the scanners.

According to the exemplary embodiment, a detection algorithm can be used to classify any images by detection of small object or several objects in particular area where the size of the individual objects is small relative to the size of the area. In order to find drugs hidden in the stomach area, additional images derived from the original image are used. These additional images can be used in logarithmic and contrasted form. Also, saliency map image is used.

The logarithmic picture reflects a degree of absorbing of transmitted radiation by different body parts and objects. The contrasted image visualizes small details and provides reliable image property data. A saliency map of the image allows for defining objects of a given scale. The parameters of the saliency map are selected in order to visualize the drug-filled pouches (or bags) inside the stomach area.

In one embodiment, a sliding window method can be used. A detection window, which runs across the entire stomach area, is classified. The areas with drugs need to be distinguished not only from other fairly consistent stomach portions, but also from low-contrast anatomical parts (e.g., ribs, spine, pelvic bones, etc.) as well as from high-contrast non-anatomical objects. According to the exemplary embodiment, classification of windows for presence of drugs in the stomach area is achieved as follows:

- filtering of low-contrast anatomic areas uses their positioning defined by relative coordinates that are symmetrical relative to the body symmetry axis;
- in order to filter high-contrast non-anatomic objects, a search of these objects is implemented using a corresponding classifier and a subsequent removal of the areas occupied by the non-anatomic objects is executed.

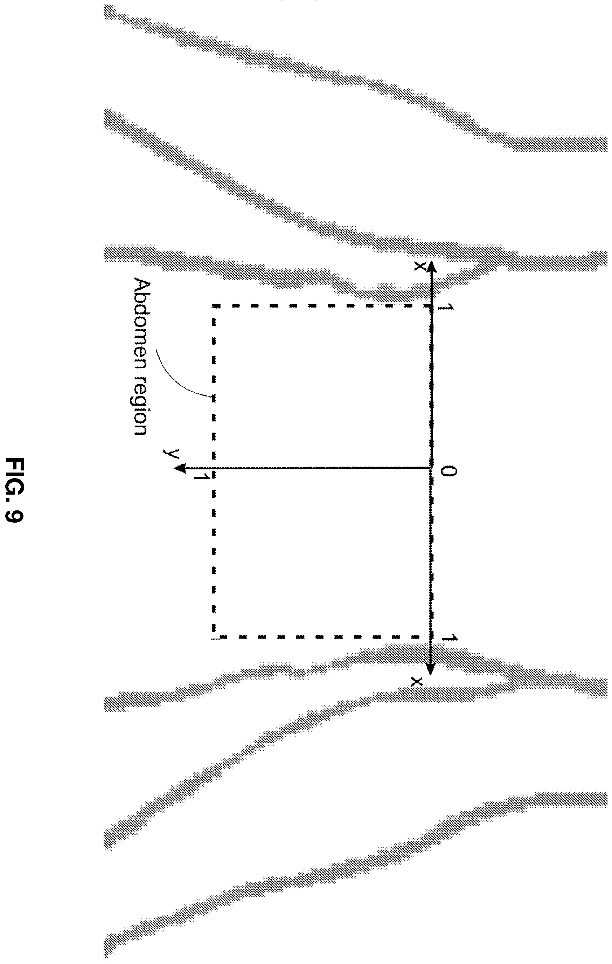

The relative coordinates (see **FIG. 9**) allow to group anatomic objects of a certain type for different people because they have close values of coordinates. These coordinates are symmetrical relative to the body symmetry axis and the anatomic objects located on the left and on the right of the spine also have close values of coordinates. Grouping of different types of anatomic objects provides for efficient objects filtering for classification of windows with drugs (or suspected drugs).

Detection of high-contrast objects is achieved by segmentation of suspected areas and by checking these areas by high-contrast classifier. In order to improve a window classifier, features invariant under rotation and constructed from periodic properties (e.g., Fourier and cosine transform coefficients) are used. The features invariant to rotation guarantee that the same frequency in any direction (e.g., horizontal or diagonal) produces the input into one common property instead of affecting several coefficients, as would be the case for regular periodic features.

However, precise detection of drugs requires construction of an image classifier based on individual window classification data. The image classification can use a method for anomalies detection since a number of images without drugs are substantially higher than of those with drugs in them. A set of image features is created based on window classification data. This method considers that the images without drugs in them have multivariate normal distribution of features. The images with drugs are considered to be an "anomaly" because they have abnormal distribution of features and can be classified by selection of a threshold value of a distribution function.

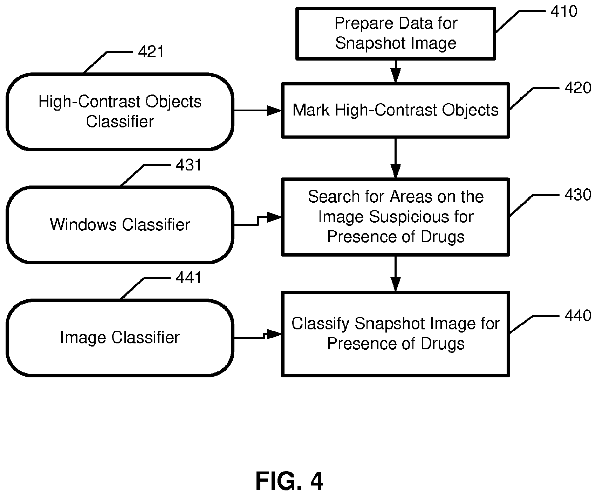

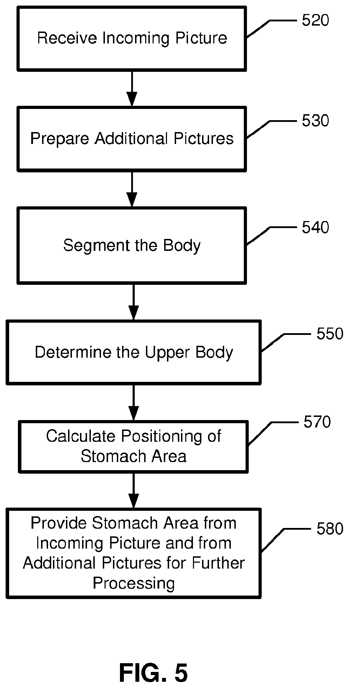

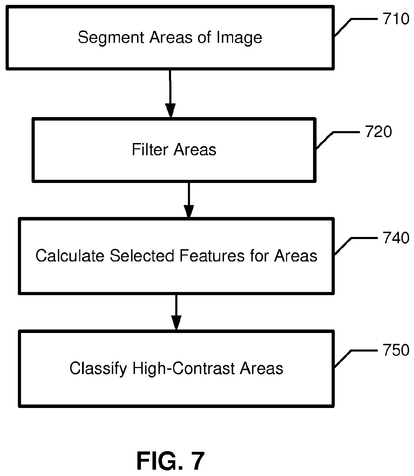

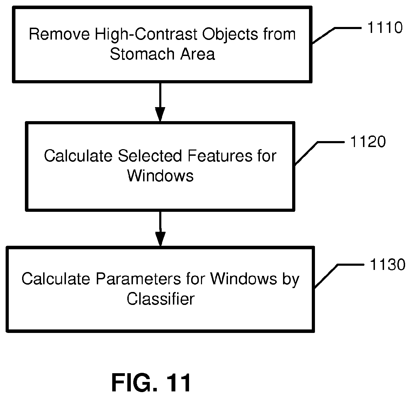

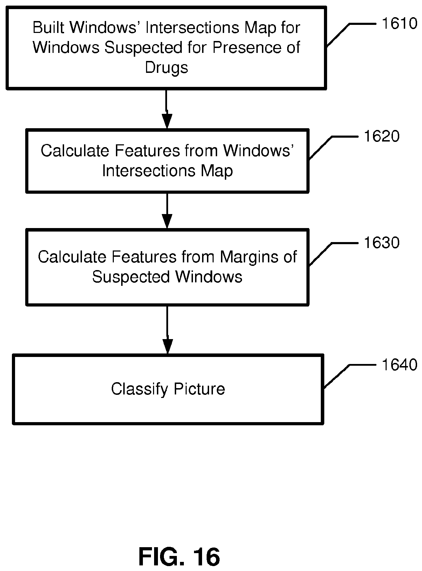

**FIG. 4** illustrates an algorithm for drug detection, in accordance with the exemplary embodiment. In step **410,** a snapshot is loaded and a data required for analysis is prepared (as shown in **FIG. 5**). In step **420,** high-contrast objects are segmented for classification by a high-contrast object classifier **421** (as shown in **FIG. 7**). In step **430,** the high-contrast objects are removed from the original image and from the additional images. Then, the sliding window method is applied. A search for areas on the image suspicious for presence of drugs is performed by a classifier **431** (as shown in **FIG. 11**). In step **440,** the common features are calculated for the stomach area and classified for presence of drugs by the image classifier **441** (as shown in **FIG. 16**).

**FIG. 5** illustrates a flow chart of a step of an image processing algorithm, which includes loading a snapshot for analysis and preparing data for subsequent steps of an algorithm. The incoming picture is received in step **520** and processed for additional images (logarithmic, contrasted and a saliency map) in step **530**. The saliency map is an image processed based on a human attention system. This system considers that a human eye fixates on different parts of a complex image sequentially. The exemplary algorithm uses a saliency map focused on a background with a scale 12, 24 and 48 in order to reflect drug containers of 10-20 pixels in size.

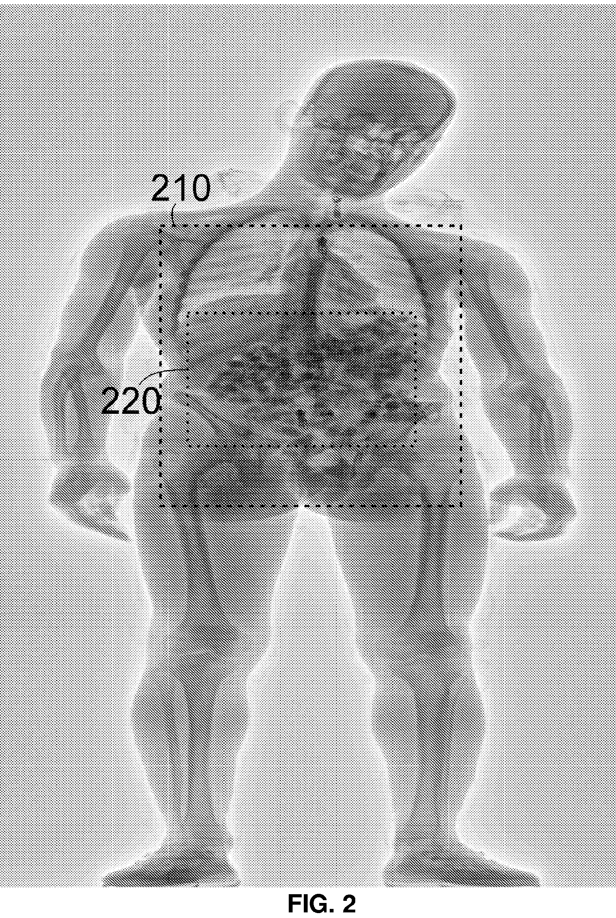

Contrasting of an image is implemented by processing an image in order to create better local contrast between adjacent areas of the image. A local statistics for minimums, maximums and average values in each small area of the image are collected in order to use this data for redistribution of intensity of pixels of the areas. In step **540,** the human body is segmented on a logarithm image based on a fixed threshold. The threshold is selected on a large number of images, so the body is almost completely separated from the background. In step **550,** an upper body is determined by one of the known methods (see **210** in **FIG. 2**). One method determines maximum area of intersection of lines and columns where a number of body pixels exceed a threshold.

Another method finds an upper body borders' contours using a pre-constructed two-dimensional model. Then, the contour is approximated by a vertically located rectangle. The upper body is determined as a rectangular area with vertical and horizontal coordinates of upper left point $x_{upper}$ and $y_{upper}$, width $w_{upper}$ and height $h_{upper}$. Then, in step **570,** a stomach location (see **220** in **FIG. 2**) relative to the upper body is calculated as:

$$x_{st} = x_{upper} + w_{upper} * k_x;$$

$$y_{st} = y_{upper} + h_{upper} * k_y;$$

$$w_{st} = w_{upper} * k_w;$$

$$h_{st} = h_{upper} * k_h;$$

where $x_{st}$ and $y_{st}$ are coordinates of an upper left point of the stomach area and $w_{st}$ and $hs_t$ are width and height of the area. The parameters $k_x$ and $k_y$ reflect relative offset from the upper left corner of the upper body area and $k_w$ and $k_h$ are relative width and height of the stomach area. All of the offset parameters are set relative to the width and the height of the upper body area. The parameters $k_x$, $k_y$, $kw$ and $k_h$ are selected on a large set of snapshots in such a way that the stomach area determined by the above formula closely matches the stomach area marked by an expert on most of the snapshots. In step **580,** the stomach area is derived from the incoming image and from the additional images for further analysis.

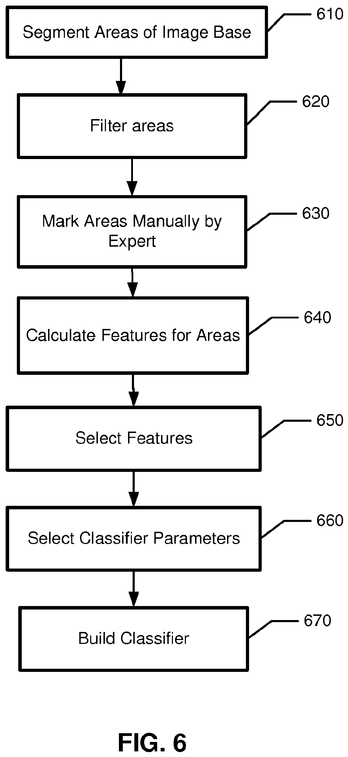

**FIG. 6** illustrates a flow chart for building (or training) a classifier for high-contrast objects. According to the exemplary embodiment, marking of high contrast areas is implemented in order to eliminate some areas from further analysis for drugs detection. After the high-contrast areas are removed from the stomach area, only anatomic areas and the drug filled containers (if present) along with other low-contrasts areas are left in the image of the stomach area. Thus, this step simplifies drugs detection because a number of non-anatomic objects are reduced. Training of the classifier depicted in **FIG. 6** is performed on a training set of snapshots.

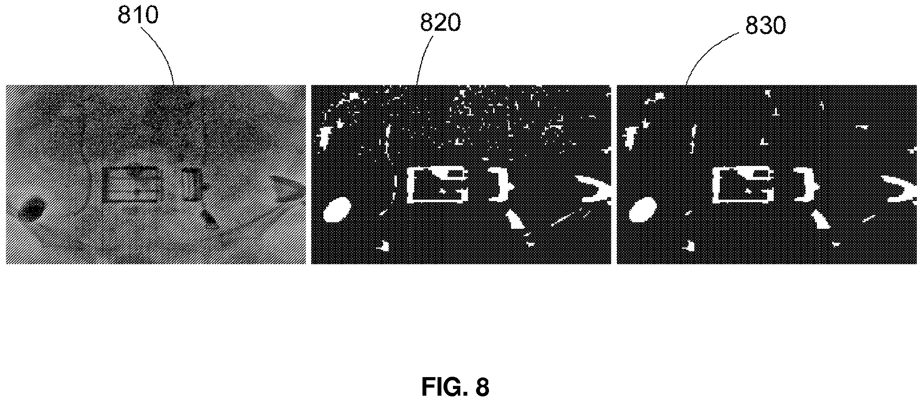

In step **610,** stomach areas of training images are segmented into suspected high-contrast areas and a background by using a global threshold on saliency map of the logarithm image focused on the background with the scale of 12, 24 and 48. The threshold is selected so that the high-contrast objects match closely the objects selected by the expert. Then, the images are subjected to a morphological connection of areas by square elements (size 3 x 3). This connection evens out the object edges and fills background pixels inside the objects. An example of segmentation of areas of the image is depicted in **FIG. 8** (see **810** and **820**).

In step **620,** filtering out small objects is implemented using minimal linear size and area of the object. The size filters are selected in such a way that noise areas of a size approaching the scanner resolution are filtered out. An example of the segmented areas after filtering is depicted in **FIG. 8** (see picture **830**). In step **630,** manual marking of the high contrast objects by an expert is performed. All visible non-anatomic objects located in the stomach area that have intensity contrast compared to the background equals or larger than the intensity for the object are marked. Then, in step **640,** a set of intensity and geometric features is calculated and selected (in step **650**) on a mask defined by the segmented area for the original and additional images. The geometric features are:

- a relative vertical coordinate of a center of the area (see **FIG. 9**) calculated as a fraction of an average of a row numbers of all area points of the stomach over the height of the stomach;
- a relative horizontal coordinate of the center of the area (see **FIG. 9**). An average column numbers of the area points are calculated. Then, a distance from the calculated center to the middle of the stomach is calculated. A fraction of the distance over a half of stomach width is used as the horizontal coordinate property;
- sizes - length of the area along a horizontal and a vertical directions;
- an area - a number of pixels inside segmented area;
- a perimeter - a number of pixels located on the border of the area and the background;
- geometric Hu features ((1962), Visual pattern recognition by moment invariants, Information Theory, IRE Transactions on, V. 8(2), P. 179-187) - i.e., area features invariant relative to translations, scale and rotations;
- geometric Flusser features ((1993), Pattern recognition by affine moment invariants, Pattern Recognition, V. 26(1), P. 167-174) that are invariant relative to common affine transformations;
- geometric Gupta features ((1987), Contour sequence moments for the classification of closed planar shapes, Pattern Recognition, V. 20(3), P. 267-272);
- i.e., features of area borders invariant to translations, scale and rotations.

The intensity features are:

- basic features of intensity, gradient and laplacian (i.e., integral, average and maximum values);
- Haralick features describing texture ((1973), Textural Features for Image Classification, Systems, Man and Cybernetics, IEEE Transactions on, V. SMC-3(6), P. 610-621);
- Gabor features used for texture description on different scales and in different directions (Kumar, A., and G. K. H. Pang (2002), Defect detection in textured materials using Gabor filters, Industry Applications, IEEE Transactions on, V 38(2), P. 425-440);
- Hu features (see above) calculated by the intensity in a given area (instead of a binary area image).

In addition to the above features, square, cube or higher power values of the features can be used. A large number of features make for more precise classification until a number of features matches a number of data for which the classifier is constructed. If a number of features are increased further, an overfitting effect takes place - i.e., the classifier is improved on a training set of data while the results on a test set of data decrease. In step **650,** a set number of best classifier features are selected out of all features based on manually selected marks. A Sequential Forward Selection method can be used in combination with Fisher criteria. Then, the best parameters for the classifier are selected based on the features in step **660.** Only the selected features and the best classifier parameters are used for building the classifier in step **670** and for further classification of high-contrast objects.

A classification algorithm can use standard methods such as, for example, a support vector machine. Selection of classifier parameters can be implemented by a sliding control method for going through various sets of parameters. The parameters that provide for best classification results of high-contrast objects are used for construction of the classifier in step **670.**

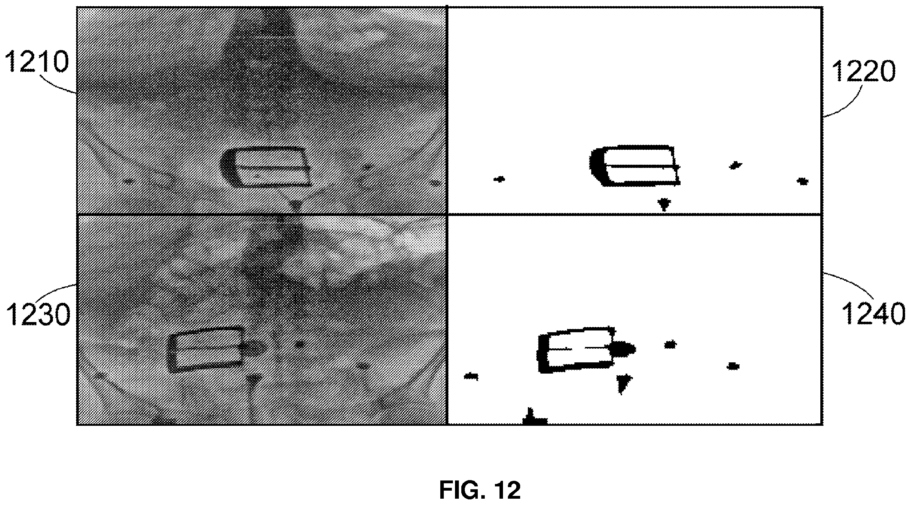

Classification scheme of high-contrast objects in a stomach area on new images is depicted in **FIG. 7.** In step **710,** the areas of the image that have suspected high-contrast objects are segmented. In step **720,** the areas are filtered by size and area (as described above). A set of selected features (geometric and intensity) used for construction of the classifier are calculated on the new image in step **740.** Note that the calculation is performed for incoming (i.e., original) and for additional images on a mask defined with segmented areas. The calculated features are used for classification of the areas by the constructed classifier in step **750.** Classification results for high-contrast objects are shown in **FIG. 12.** The classifier checks segmented areas for high-contrast objects.

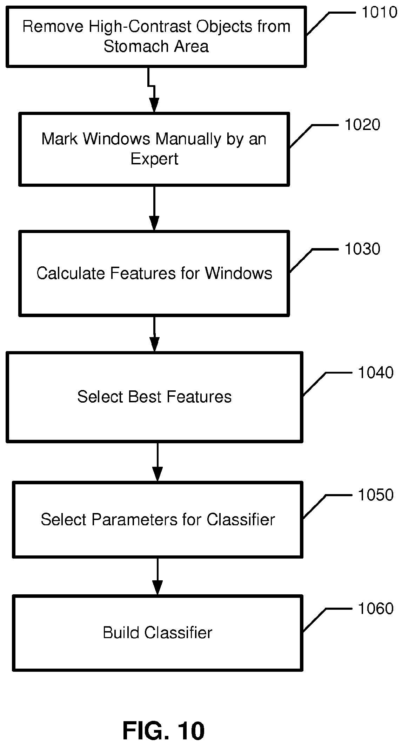

**FIG. 10** illustrates a flowchart for building a drugs classifier for windows. In step **1010,** high-contrast objects are removed from a stomach area. Windows are marked by an expert in step **1020.** Features for windows are calculated in step **1030.** Unlike high-contrast objects, the geometrical features are not used. Instead, Fourier and cosine transform coefficients along with local binary patterns are used. Best suited features are selected in step **1040.** Then, the parameters for the classifier are selected based on the features in step **1050.** Selected features and the best classifier parameters are used for building the windows classifier in step **1060.**

**FIG. 11** illustrates a flow chart for searching for windows suspected for containing drugs. According to the exemplary embodiment, a search for suspicious areas is implemented using the sliding window method, where a window size is selected to be twice the size of the typical container with drugs in images used for training of the classifier. A horizontal offset and a vertical offset for neighboring windows are selected to be two times smaller than their size. In step **1110,** the high-contrast objects are removed from the stomach area. The process calculates selected features for windows in step **1120.** In step **1130,** windows' classes and margins are obtained using the constructed windows classifier.

According to the exemplary embodiment, the classifier can calculate classes - drugs or background, to which the analyzed window belongs. The classifier also returns a classification reliability value, calculated as a margin from a point described by window features to a hyper-plane dividing the classes in a features space. For example, two windows have offsets -0.5 and -1.2. Negative values mean that these windows are suspected for presence of drugs. Two other windows can have positive offsets 0.2 and 0.7. They are classified by the classifier as a background. Margins are used at the final stage for classification of the entire image for presence of drugs.

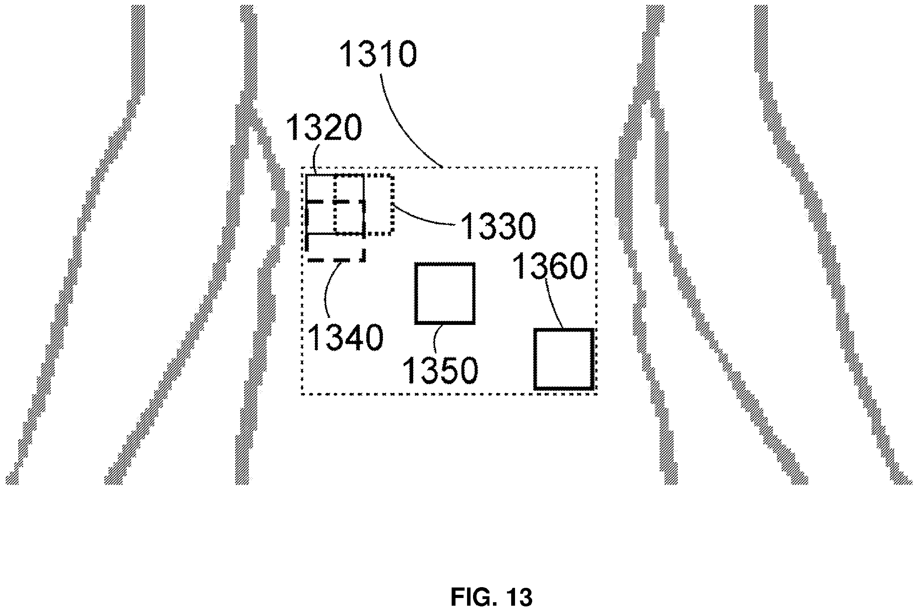

An example of locations of the detection window is shown in **FIG. 13.** An initial position **1320** of the window is shown in the upper left corner of the stomach area **1310.** This detection window needs to be checked for presence of drugs. Once this window is checked, the next window **1330** is analyzed. After the detection window reaches the right edge of the stomach area **1310,** the window moves to the left position **1340** in the second row. Thus, the detection window **1350** has to go over the entire stomach area **1310.** The last position of the window **1360** is located in the bottom right corner of the stomach area **1310.**

In order to classify the windows containing drugs, an appropriate classifier needs to be trained. Training of the classifier is depicted in **FIG. 10.** This step is implemented on the basis of a new image training set. The images have to differ from the images used for training the high contrast objects classifier in order to be classified appropriately. First step in constructing windows classifier is preparing data for a training set of images (see **FIG. 5**) and searching for the high-contrast objects as shown in **FIG. 7.** Then, the areas with high-contrast objects are eliminated. **FIG. 12** illustrates contrasted areas of the stomach **1210** and **1230** and maps for the same areas (**1220** and **1240**) shown after elimination of the high-contrast objects. The processed areas **1220** and **1240** are used for further analysis for drugs.

In order to account for invariance to rotation for periodic parameters, the additional features can be calculated, for example, for Fourier and cosine transform coefficients. Periodic coefficients $f(i,j)$ can be used, where $i$ and $j$ are indexes of rows and columns of a square matrix of coefficients of a size S. If the invariant to rotation periodic parameters are used, the same horizontal, vertical or diagonal periodicity have to produce an input into one common property - not into different coefficients as in the case with the Fourier and cosine transform coefficients.

A number of invariant to rotation features equals to the length of a diagonal of the coefficient matrix rounded to the highest number:

$$nRI = ceil(S\sqrt{2}),$$

where *ceil()* is rounding up function.

In order to calculate invariant features for each coefficient, a distance to the upper left pixel of the coefficient matrix is calculated as:

$$r = \sqrt{(i-1)^2 + (j-1)^2} \ .$$

Then, the coefficient *f(i,j)* is added with a certain weight to the two invariant to rotation features:

$$fRI(floor(r)) = fRI(floor(r)) + f(i,j) \cdot (ceil(r) - r),$$

$$fRI(ceil(r)) = fRI(ceil(r)) + f(i,j) \cdot (r - floor(r)),$$

where *fRI* - calculated features invariant to rotation, *floor()* - rounding to nearest lower value function.

Additional features comprising a sum of features invariant to rotation can be calculated as:

$$fRISUM(p,q) = \sum_{j=p}^{q} fRI(j).$$

An aggregate number of these features is calculated as:

$$nRISUM = \frac{1}{2} nRI \cdot (nRI - 1).$$

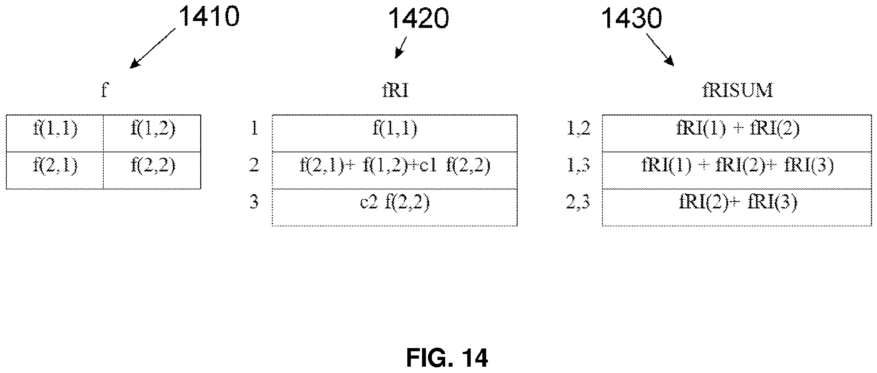

A goal of using these features is uniting the coefficients with similar frequencies for subsequent use in classification, because a meaningful property can be a sum of neighboring elements (instead of a single component of the invariant property). An example of calculation of invariant to rotation features for periodicity for coefficients matrix of a size 2 x 2 is shown in **FIG. 14.** The coefficients **1410** are included into the coefficients **1420** invariant to rotation as weighted sum calculated by above formulas. Since the size for the periodic property is S=2, the number of such features is 3. A first column of coefficients **1420** contains indexes of invariant features and a second column contains a formula for calculating these features from the original ones **1410,** where *c1* and *c2* are factors for the coefficients *f(i,j)* from the above formulas.

Likewise, for the sums of features invariant to rotation, in table **1430** the left column contains indexes of sum property and the right column contains example of calculations of component of the sum property using single invariant features. Increase of a number of features enhances the accuracy of classification. Selection of a number of best suited features from all the calculated features is implemented by, for example, Sequential Forward Selection method.

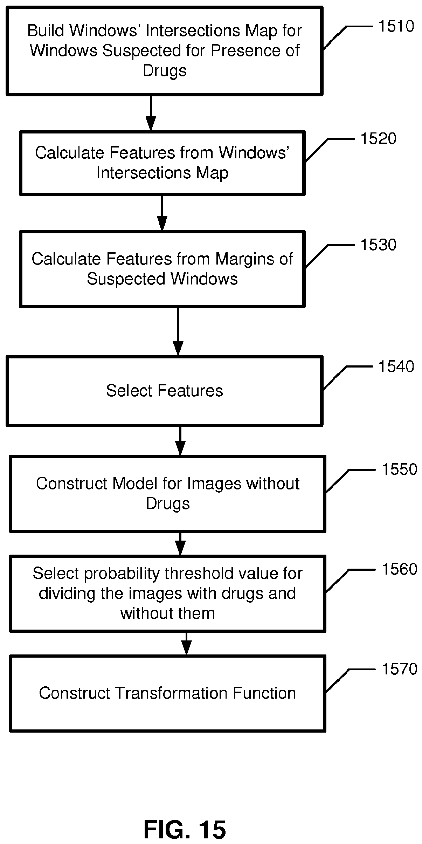

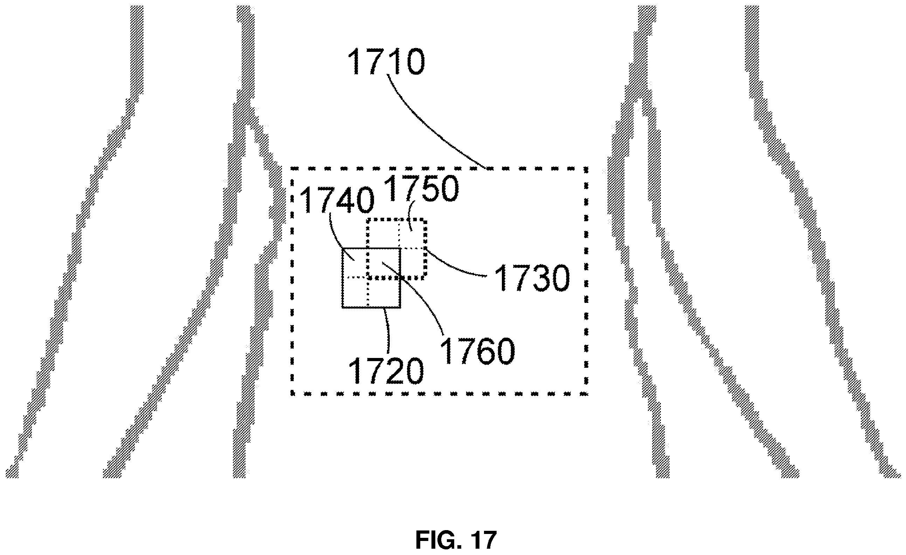

**FIG. 15** illustrates a flow chart for constructing the image classifier. In step **1510,** the process builds windows' intersections map for windows suspected for presence of drugs. In step **1520,** the process calculates features from a windows' intersections map. In step **1530** the process calculates features from margins of the suspected windows. In step **1540,** the most suitable features are selected. In step **1550,** the process constructs a model for images without drugs. In step **1560,** the process selects a probability threshold for dividing the images with drugs and without them. In step **1570,** the process constructs a transformation function. The data about position of windows **1720** and **1730** (see **FIG. 17)** suspected for presence of drugs in a stomach area **1710** is used for construction of windows' intersection map.

All windows have the same size. Windows' offsets in horizontal and vertical directions are two times smaller than the size of the window. Thus, a window can be divided into four sub-windows of half the original size. If the suspected window has all sub-windows marked, then each sub-window in the stomach can be marked 0, 1, 2, 3 or 4 times. For example, in **FIG. 17** the sub-windows **1740** and **1750** are only marked once, while sub-window **1760** is marked twice. A number of sub-windows marked a certain number of times can be used as an efficient criteria (aggregate feature) for separating the images with and without drugs.

Based on an intersection map, the following can be determined:

- a number of windows classified for drugs;
- a number of sub-windows with intersection 1;
- a number of sub-windows with intersection 2;
- a number of sub-windows with intersection 3;
- a number of sub-windows with intersection 4.

Another set of data that can be used for creating image aggregate features are the margin values from a hyper-plane dividing classes in features space. The features are produced during classification of the stomach area windows. The margin reflects the probability that the selected window contains drugs. The large margins indicate a higher probability of drug presence. The following aggregate features can be constructed from the margin values for separating the images with drugs and the ones without drugs:

- a sum of margins to the dividing hyper-plane;
- an average value of the margins to the dividing hyper-plane;
- a standard deviation of the margins to the dividing hyper-plane;
- 1-st maximum absolute value of the margin to the dividing hyper-plane;
- 2-d maximum absolute value of the margin to the dividing hyper-plane;
- 3-d maximum absolute value of the margin to the dividing hyper-plane;
- 4-th maximum absolute value of the margin to the dividing hyper-plane;
- 5-th maximum absolute value of the margin to the dividing hyper-plane;
- a sum of 5 maximum margins to the dividing hyper-plane; and
- an average value of 5 maximum margins to the dividing hyper-plane.

The second step of teaching the classifier is selection of best suited features from the above list. For example, the features that are linearly dependent from other features are discarded. According to the exemplary embodiment, a model for images without drugs is constructed using selected features. The model is implemented as a multivariate normal distribution with a zero average value for all selected features, since for most images without drugs the features should have zero values. In order to construct the model, a training set of images without drugs is used. The selected features (from the above list) are calculated. A multivariate normal model for images without drugs is constructed.

The multivariate normal distribution is described by a covariance matrix, which is calculated as:

$$\Sigma = \frac{X^T X}{m},$$

Where $m$ - is a number of images in a training set, $X$ - matrix of features with $m$ rows containing selected features for the images. The resulting covariance matrix is used in a formula for calculation of the probability $f(x)$ of image being normal (i.e., does not contain drugs):

$$f(x) = \frac{1}{(2\pi)^{n/2} |\Sigma|^{1/2}} \cdot \exp\left[ -\frac{1}{2} x^T \Sigma^{-1} x \right],$$

Where x - a row of aggregate features of the analyzed snapshot. If the calculated value of f(x) approaches the maximum, it indicates the snapshot is normal - i.e., does not contain any drugs.

Maximum value of probability is as follows:

$$f_{\max} = \max(f(x)) = \frac{1}{(2\pi)^{n/2} |\Sigma|^{1/2}}.$$

If the probability is close to zero (i.e., f(x)<<fmax), this means that drugs are present inside the stomach of the person whose snapshot image is being reviewed. When the classifier is constructed, a probability threshold value is selected for dividing the images with drugs and without them. A new training set of images of various types is used. Selected features (from the above list) are calculated for each of the images. The features are used in the probability calculation formula above in order to calculate a degree of similarity of the image to the images without drugs. A threshold probability value $f_{\varepsilon}$ is selected based on analysis of probabilities values for images with drugs and the ones without drugs in order to divide the two types of images using the following rule:

- an image does not have drugs if $f(x) > f_\varepsilon$;
- an image contains drugs if $f(x) < f_\varepsilon$ or $f(x) = f_\varepsilon$.

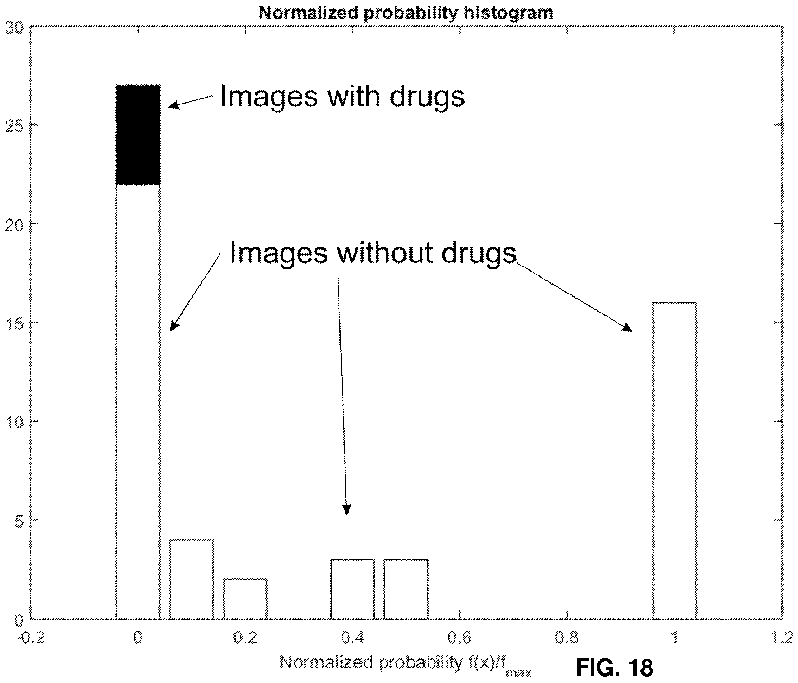

However, the threshold value $f_\varepsilon$ is not convenient for interpretation because it is several orders of magnitude less than $f_{max}$. A distribution of images based on probability of the image being free of drugs is not informative as can be seen from **FIG. 18.** Thus, a nonlinear transformation of $f(x)$ into a new function $p(x)$ reflecting a degree of difference of the image from the average normal (i.e., drug free) image in such a way that the following conditions are met:

$$f_{\max} \to p(x) = 0\%;$$

$$f_\varepsilon \to p(x) = 50\%;$$

$$0 \to p(x) = 100\%.$$

The degree of difference function is constructed in such a way that the threshold equals to 50%. The classification rule using the degree of difference from the average normal image is as follows:

- an image does not have drugs if $p(x) < 50\%$;
- an image contains drugs if $p(x) > 50\%$ or $p(x) = 50\%$.

The required transformation function can have the following format:

$$p(x) = 100\% \left( 1 - \left( \frac{f(x)}{f_{\max}} \right)^\gamma \right),$$

where y - a parameter of the transformation function, which is determined from the following equation:

$$\gamma = \log_{f\varepsilon/f\max} \frac{50}{100}.$$

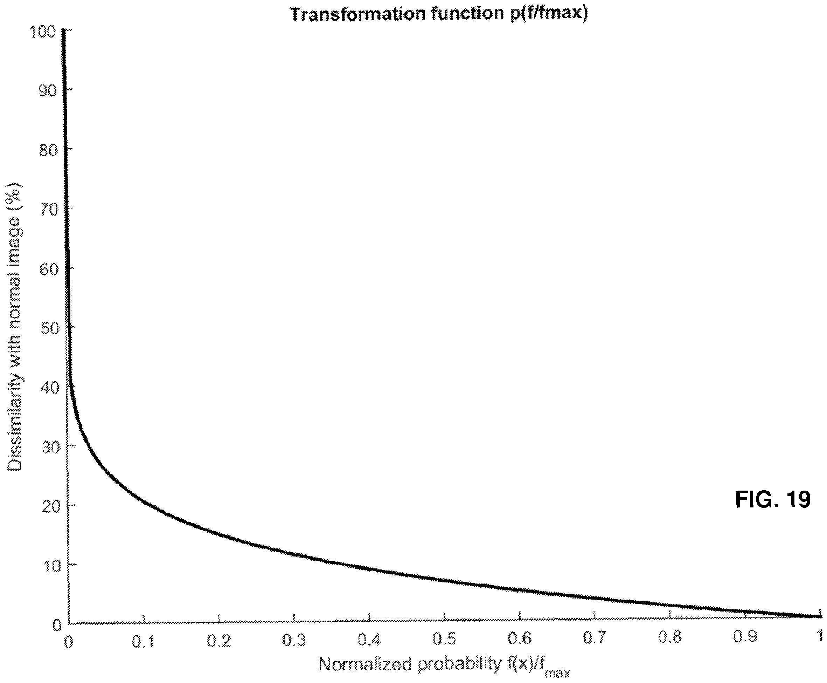

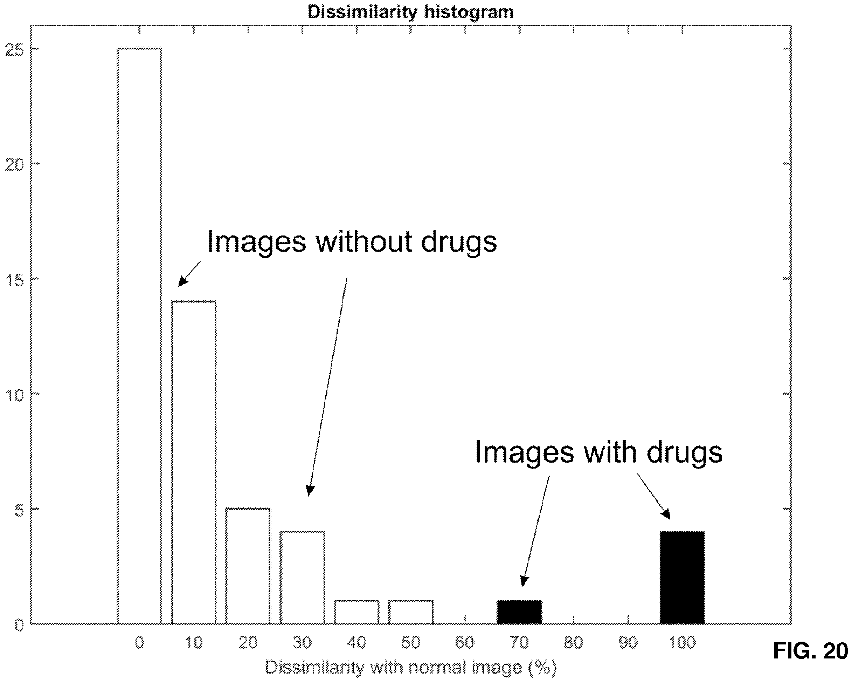

An example of the transformation function $p(f/f_{max})$ with the parameter $\gamma = 0.1$ is depicted in **FIG. 19.** Function $p(x)$ provides for a more convenient way of selection of additional thresholds for separating groups of snapshots with different amounts of drugs (see **FIG. 20**) and also allows for analyzing of the algorithm precision. For example, groups of snapshots with large and small amounts of drugs can be defined using the thresholds of the function p(x).

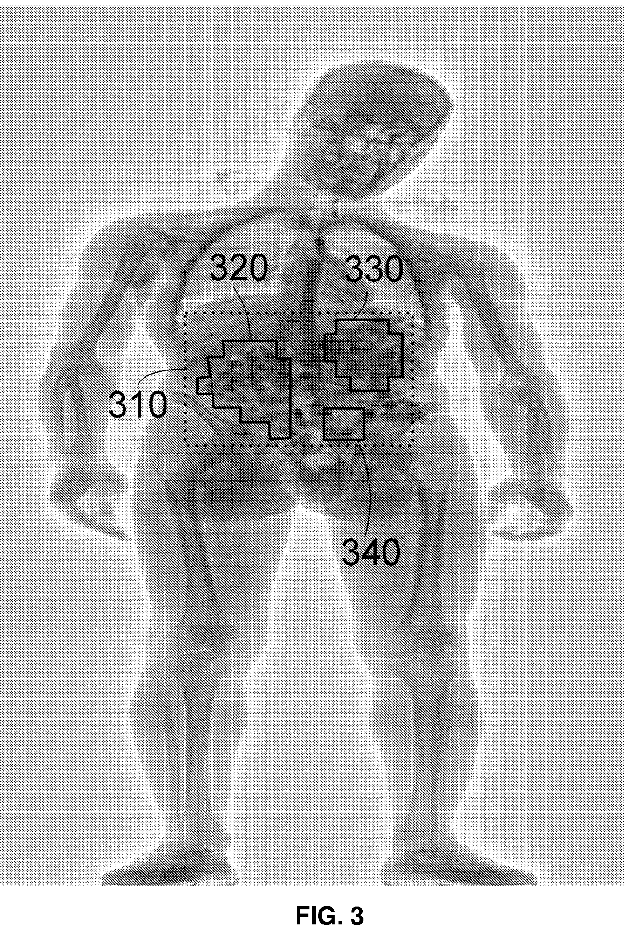

**FIG. 16** illustrates a flow chart for classifying the image for presence of drugs. In step **1610,** the process constructs a windows' intersections map for windows suspected for presence of drugs. The intersections map with a certain minimal level of intersections (e.g., 2 or 3) can be used for visualization of areas suspected for presence of drugs. In this case, the operator is shown either the area where the number of intersections is greater or equals to a pre-set threshold or the area is broadened by dilation with one possible structural element. An example of the suspected areas **320, 330** and **340** with the intersection threshold 2 on the stomach **310** is depicted in **FIG. 3.**

In step **1620,** the process calculates features from windows' intersections map. In step **1630,** the process calculates features from the margins of the suspected windows and classifies the picture (snapshot) using the features in step **1640.** The selected features, a value of the transformation parameters and the covariance matrix are used for calculation of the degree of difference of the snapshot from the average normal image (without drugs) using the above formulas. The calculated degree of difference (i.e., dissimilarity) is used for classification of the image using a rule for comparison to the threshold value. If the threshold reached or exceeded, the drugs are detected on the image. The threshold value is set at 50%.

Having thus described the different embodiments of a system and method, it should be apparent to those skilled in the art that certain advantages of the described method and apparatus have been achieved. In particular, it should be appreciated by those skilled in the art that the proposed method provides for an efficient detection of drugs located inside person's stomach.

The invention is defined by the appended claims.

**Bibliography:**

Bishop, C. M. (2006), Pattern Recognition and Machine Learning, Springer.

Cortes, C., and V. Vapnik (1995), Support-vector networks, Mach Learn, V. 20(3), P. 273-297.

Drouin, S., R. Poulin, L. Perron, and D. Gudmundson(2015), US20150010128 A1: Method and system for identifying a liquid product in luggage or other receptacle.

Duta, N., A. K. Jain, and M. P. Dubuisson-Jolly (2001), Automatic construction of 2D shape models, Pattern Analysis and Machine Intelligence, IEEE Transactions on, V. 23(5), P. 433-446.

Flusser, J., and T. Suk (1993), Pattern recognition by affine moment invariants, Pattern Recognition, V. 26(1), P. 167-174.

Gupta, L., and M. D. Srinath (1987), Contour sequence moments for the classification of closed planar shapes, Pattern Recognition, V. 20(3), P. 267-272.

Haralick, R. M., K. Shanmugam, and I. H. Dinstein (1973), Textural Features for Image Classification, Systems, Man and Cybernetics, IEEE Transactions on, V. SMC-3(6), P. 610-621.

Hu, M.-K. (1962), Visual pattern recognition by moment invariants, Information Theory, IRE Transactions on, V. 8(2), P. 179-187.

Jain, A. K., R. P. W. Duin, and M. Jianchang (2000), Statistical pattern recognition: a review, Pattern Analysis and Machine Intelligence, IEEE Transactions on, V. 22(1), P. 4-37.

Kumar, A., and G. K. H. Pang (2002), Defect detection in textured materials using Gabor filters, Industry Applications, IEEE Transactions on, V. 38(2), P. 425-440.

Laurikkala, J., M. Juhola, and E. Kentala (2000), Informal Identification of Outliers in Medical Data, paper presented at 5th International Workshopon Intelligent Data Analysis in Medicine and Pharmacology, Berlin,Germany.

Lehmann, L. A., R. E. Alvarez, A. Macovski, W. R. Brody, N. J. Pelc, S. J. Riederer, and A. L. Hall (1981), Generalized image combinations in dual KVP digital radiography, Medical Physics, V. 8(5), P. 659-667.

Mery, D. (2011), Automated Detection of Welding Discontinuities without Segmentation, Materials Evaluation, P. 657-663.

Mery, D., and M. A. Berti (2003), Automatic detection of welding defects using texture features, Insight - Non-Destructive Testing and Condition Monitoring, V. 45(10), P. 676-681.

Mery, D., R. R. da Silva, L. P. Caloba, and J. M. A. Rebello (2003), Pattern recognition in the automatic inspection of aluminium castings, Insight - Non-Destructive Testing and Condition Monitoring, V. 45(7), P. 475-483.

Montabone, S., and A. Soto (2010), Human detection using a mobile platform and novel features derived from a visual saliency mechanism, Image and Vision Computing, V. 28(3), P. 391-402.

Ojala, T., M. Pietikainen, and T. Maenpaa (2002), Multiresolution gray-scale and rotation invariant texture classification with local binary patterns, Pattern Analysis and Machine Intelligence, IEEE Transactions on, V. 24(7), P. 971-987.

Saisan, P. (2013), US8437556 B1: Shape-based object detection and localization system.

Sun, Y., X. Wang, L. Wang, Y. Yi, and M. Chen (2014), US8774460 B2: Method of processing body inspection image and body inspection apparatus.

Vaidya, N. M. (2014), US8774461 B2: Method and system for automatic detection of a class of objects.

Yu, Z., and C. Bajaj (2004), A fast and adaptive method for image contrast enhancement, paper presented at Image Processing, 2004. ICIP '04. 2004 International Conference on, 24-27 Oct. 2004.

Zuiderveld, K. (1994), Contrast Limited Adaptive Histogram Equalization, in Graphic Gems IV, edited, pp. 474-485, Academic Press Professional, San Diego.

**Claims**

1. A method for an automated detection of swallowed capsules on X-ray scanner images, the method comprising:

   (a) acquiring an incoming image (520) of a person passing through the scanner;
   (b) generating additional images (530) by performing transformations of the incoming image;
   (c) determining a position of a stomach area (310) on the incoming image and on the additional images;

(d) classifying segmented regions (420) of the stomach area (310) of the incoming image;

(e) calculating geometrical and intensity features (740) along with rotationally invariant periodic features for windows on the stomach area (310);

(f) detecting suspected windows (320, 330, 340) on the stomach area (310);

(g) calculating aggregate features for the properties of the suspected windows (320, 330, 340);

(h) using the model for the images that do not contain swallowed capsules for classifying the incoming image (440) using a threshold for a dissimilarity function; and

(i) informing a user that the incoming image contains the swallowed capsules based on step (h).

2. The method of claim 1, wherein determining the position of the stomach area (310) on the incoming image and on the additional images includes determining an upper body area (210) on the incoming image, and wherein informing the user that the incoming image contains the swallowed capsules includes determining if the dissimilarity function for aggregate features for the incoming image is larger or equal to the threshold.

3. The method of claim 1, wherein periodic features is used to calculate the rotationally invariant features in such a way that same horizontal, vertical or diagonal periodicity produce an input into one common property.

4. The method of claim 1 further comprising segmenting the stomach area (310) prior to the calculating of geometrical and intensity features along with rotationally invariant periodic features for windows on stomach area (310); or further comprising:

   building a windows' intersection map (1510) for windows suspected for presence of swallowed capsules; and calculating aggregate features from the windows' intersection map.

5. The method of claim 1, wherein the additional images that are generated from the incoming image are any of:

   logarithmic images;
   contrasted images; and
   saliency map images.

6. The method of claim 1, wherein aggregate features are constructed from the margin values for separating images with swallowed capsules and images without swallowed capsules; wherein optionally the aggregate stomach area features are any of:

   a sum of margins to a dividing hyper-plane;
   an average value of the margins to a dividing hyper-plane; and
   standard deviation of the margins to a dividing hyper-plane.

7. The method of claim 5, wherein the aggregate stomach area features are any of:

   1-st maximum absolute value of the margin to a dividing hyper-plane;
   2-d maximum absolute value of the margin to a dividing hyper-plane;
   3-d maximum absolute value of the margin to a dividing hyper-plane;
   4-th maximum absolute value of the margin to a dividing hyper-plane;
   5-th maximum absolute value of the margin to a dividing hyper-plane;
   a sum of 5 maximum margins to a dividing hyper-plane; and
   an average value of 5 maximum margins to a dividing hyper-plane.

8. The method of claim 1, wherein the model of images without swallowed capsules is a multivariate image model constructed based on a multivariate normal distribution described by a covariance matrix of training data set.

9. The method of claim 1, further comprising calculating any of geometric features for segmented areas:

   a relative vertical coordinate of a center of an area calculated as a fraction of an average of a row numbers of all area points of the stomach area (310) over a height of the stomach;
   a relative horizontal coordinate of a center of an area calculated as a distance from a calculated area center to a middle of the stomach divide by a half of a stomach width;
   a length of an area along a horizontal and a vertical directions;

a number of pixels inside an area; and
a number of pixels located on a boarder of an area and a background.

10. The method of claim 1, wherein the geometric features are any of:

geometric features invariant relative to translations, scale and rotations;
geometric features invariant relative to common affine transformations;
geometric features of area borders invariant to displacements, scale and rotations.

11. The method of claim 1, further comprising calculating any of the following intensity features:

integral, average and maximum values of intensity, gradient and laplacian;
features of image texture; and
features used for texture description on different scales and in different directions; or
wherein a sum of selected rotationally invariant periodic features is used for constructing the classifier (421).

12. The method of claim 1, further reducing the dimensionality of training data by using one of the state of art selecting features method; or
further comprising generating the model for images that do not contain swallowed capsules based on training data set; or
further comprising constructing a classifier (421) based on geometric and intensity features along with rotationally invariant periodic features of images.

13. The method of claim 1, further comprising informing the user that the incoming image does not contain swallowed capsules if dissimilarity function value for aggregate features for the current incoming image is below the threshold; or

wherein the additional images are generated in order to analyze a larger pool of image features; or
further comprising removing the high-contrast objects (430) from the stomach area image.

14. The method of claim 1, further comprising selecting parameters for a windows' classifier based on the window features for multiple images from a training database; and

constructing the windows' classifier based on the parameters; or
further comprising calculating margin values of the suspected windows, after step (h); or
further comprising subtracting high-contrast objects (430) from stomach area (310) of the incoming and additional images, after step (e).

15. A system for an automated detection of swallowed capsules on X-ray scanner images comprising:

an X-ray scanner;
a processing unit connected to the X-ray scanner and configured to receive and process an image from the X-ray scanner;
wherein:

the processing unit acquires an incoming image (520) of a person passing through the scanner;
the processing unit generates additional images (530) by performing transformations of the incoming image;
the processing unit determines a position of a stomach area (310) on the incoming and additional images;
the processing unit classifies segmented regions (420) of the stomach area (310) of the incoming image;
the processing unit calculates geometrical and intensity features (740) along with rotationally invariant periodic features of windows on the stomach area (310);
the processing unit detects suspected windows (320, 330, 340) on the stomach area (310);
the processing unit calculates aggregate features for the properties of the suspected windows (320, 330, 340);
the processing unit, using the model for the images that do not contain swallowed capsules, classifies the incoming image (440) based on a threshold for a dissimilarity function value defined by the image aggregate features in order to detect images having the swallowed capsules; and
the processing unit informs the operator when the swallowed capsules are detected in the stomach area (310).

**Patentansprüche**

1. Verfahren für eine automatisierte Detektion von verschluckten Kapseln auf Röntgenscannerbildern, das Verfahren umfassend:

   (a) Erfassen eines eingehenden Bilds (520) einer Person, die durch den Scanner geht;
   (b) Erzeugen zusätzlicher Bilder (530) durch Durchführen von Transformationen des eingehenden Bilds;
   (c) Bestimmen einer Position eines Magenbereichs (310) auf dem eingehenden Bild und auf den zusätzlichen Bildern;
   (d) Klassifizieren von segmentierten Regionen (420) des Magenbereichs (310) des eingehenden Bilds;
   (e) Berechnen von geometrischen und Intensitätsmerkmalen (740) zusammen mit rotatorisch invarianten periodischen Merkmalen für Fenster auf dem Magenbereich (310);
   (f) Detektieren von verdächtigen Fenstern (320, 330, 340) auf dem Magenbereich (310);
   (g) Berechnen von aggregierten Merkmalen für die Eigenschaften der verdächtigen Fenster (320, 330, 340);
   (h) Verwenden des Modells für die Bilder, die keine verschluckten Kapseln enthalten, zum Klassifizieren des eingehenden Bilds (440) unter Verwendung eines Schwellenwerts für eine Ungleichartigkeitsfunktion; und
   (i) Informieren eines Benutzers, dass das eingehende Bild die verschluckten Kapseln enthält, basierend auf Schritt (h).

2. Verfahren nach Anspruch 1, wobei Bestimmen der Position des Magenbereichs (310) auf dem eingehenden Bild und auf den zusätzlichen Bildern das Bestimmen eines oberen Körperbereichs (210) auf dem eingehenden Bild enthält, und wobei Informieren des Benutzers, dass das eingehende Bild die verschluckten Kapseln enthält, das Bestimmen enthält, ob die Ungleichartigkeitsfunktion für die aggregierten Merkmale für das eingehende Bild größer als der oder gleich dem Schwellenwert ist.

3. Verfahren nach Anspruch 1, wobei periodische Merkmale verwendet werden, die rotatorisch invarianten Merkmale in einer derartigen Weise zu berechnen, dass gleiche horizontale, vertikale oder diagonale Periodizitäten einen Eingang in eine gemeinsame Eigenschaft produzieren.

4. Verfahren nach Anspruch 1, ferner umfassend Segmentieren des Magenbereichs (310) vor dem Berechnen von geometrischen und Intensitätsmerkmalen zusammen mit rotatorisch invarianten periodischen Merkmalen für Fenster auf dem Magenbereich (310); oder
   ferner umfassend
   Erstellen einer Fenster-Schnittstellenkarte (1510) für Fenster, die für das Vorhandensein von verschluckten Kapseln verdächtigt werden; und
   Berechnen von aggregierten Merkmalen aus der Fenster-Schnittstellenkarte.

5. Verfahren nach Anspruch 1, wobei die zusätzlichen Merkmale, die aus dem eingehenden Bild erzeugt werden, beliebige von folgenden sind:

   logarithmische Bilder;
   kontrastierte Bilder; und
   Saliency-Map-Bilder.

6. Verfahren nach Anspruch 1, wobei aggregierte Merkmale aus den Randwerten konstruiert werden, um Bilder mit verschluckten Kapseln und Bilder ohne verschluckte Kapseln zu trennen; wobei wahlweise
   die aggregierten Magenbereichsmerkmale beliebige von folgenden sind:

   einer Summe von Rändern zu einer teilenden Hyperebene;
   ein durchschnittlicher Wert der Ränder zu einer teilenden Hyperebene; und
   Standardabweichung der Ränder zu einer teilenden Hyperebene.

7. Verfahren nach Anspruch 5, wobei die aggregierten Magenbereichsmerkmale beliebige von folgenden sind:

   Absolutwert des 1. Maximums des Rands zu einer teilenden Hyperebene;
   Absolutwert des 2. Maximums des Rands zu einer teilenden Hyperebene;
   Absolutwert des 3. Maximums des Rands zu einer teilenden Hyperebene;
   Absolutwert des 4. Maximums des Rands zu einer teilenden Hyperebene;

Absolutwert des 5. Maximums des Rands zu einer teilenden Hyperebene;
eine Summe von 5 maximalen Rändern zu einer teilenden Hyperebene; und
ein durchschnittlicher Wert von 5 maximalen Rändern zu einer teilenden Hyperebene.

8. Verfahren nach Anspruch 1, wobei das Modell von Bildern ohne verschluckte Kapseln ein multivariates Bildmodell ist, das basierend auf einer multivariaten Normalverteilung konstruiert wird, die durch eine Kovarianzmatrix einer Trainingsdatenmenge beschrieben wird.

9. Verfahren nach Anspruch 1, ferner umfassend Berechnen beliebiger von geometrischen Merkmalen für segmentierte Bereiche:

eine relative vertikale Koordinate eines Zentrums eines Bereichs, die als eine Fraktion eines Durchschnitts von Reihenzahlen von allen Bereichspunkten des Magenbereichs (310) über eine Höhe des Magens berechnet wird;
eine relative horizontale Koordinate eines Zentrums eines Bereichs, die als eine Distanz von einem berechneten Bereichszentrum zu einer Mitte des Magens, geteilt durch eine Hälfte einer Magenbreite berechnet wird;
eine Länge eines Bereichs entlang einer horizontalen und einer vertikalen Richtung;
eine Anzahl von Bildpunkten innerhalb eines Bereichs; und
eine Anzahl von Bildpunkten, die auf einer Grenze eines Bereichs und einem Hintergrund angeordnet sind.

10. Verfahren nach Anspruch 1, wobei die geometrischen Merkmale beliebige von folgenden sind:

geometrische Merkmale, die relativ zu Translationen, Maßstab und Rotationen invariant sind;
geometrische Merkmale, die relativ zu gewöhnlichen Affintransformationen invariant sind;
geometrische Merkmale von Bereichsgrenzen, die zu Verlagerungen, Maßstab und Rotationen invariant sind.

11. Verfahren nach Anspruch 1, ferner umfassend Berechnen beliebiger der folgenden Intensitätsmerkmale:

Integral-, Durchschnitts- und Maximalwerte von Intensität, Gradient und Laplace-Operator;
Merkmale von Bildtextur; und
Merkmale, die für Texturbeschreibung bei verschiedenen Maßstäben und in verschiedenen Richtungen verwendet werden; oder
wobei eine Summe von ausgewählten rotatorisch invarianten periodischen Merkmalen zum Konstruieren des Klassifikators (421) verwendet wird.

12. Verfahren nach Anspruch 1, ferner Reduzieren der Dimensionalität von Trainingsdaten durch Verwenden eines Verfahrens zum Auswählen von Merkmalen nach dem Stand der Technik; oder
ferner umfassend Erzeugen des Modells für Bilder, die keine verschluckten Kapseln enthalten, basierend auf einer Trainingsdatenmenge; oder
ferner umfassend Konstruieren eines Klassifikators (421) basierend auf geometrischen und Intensitätsmerkmalen zusammen mit rotatorisch invarianten periodischen Merkmalen von Bildern.

13. Verfahren nach Anspruch 1, ferner umfassend Informieren des Benutzers, dass das eingehende Bild keine verschluckten Kapseln enthält, wenn ein Ungleichartigkeitsfunktionswert für aggregierte Merkmale für das gegenwärtige eingehende Bild unter dem Schwellenwert ist; oder
wobei die zusätzlichen Bilder erzeugt werden, um eine größere Zusammenstellung von Bildmerkmalen zu analysieren; oder
ferner umfassend Entfernen der Objekte mit hohem Kontrast (430) aus dem Magenbereichsbild.

14. Verfahren nach Anspruch 1, ferner umfassend Auswählen von Parametern für einen Klassifikator eines Fensters basierend auf den Fenstermerkmalen für mehrere Bilder aus einer Trainingsdatenbank; und
Konstruieren des Klassifikators des Fensters basierend auf den Parametern; oder
ferner umfassend Berechnen von Randwerten der verdächtigen Fenster nach Schritt (h); oder
ferner umfassend Subtrahieren von Objekten mit hohem Kontrast (430) von dem Magenbereich (310) des eingehenden und der zusätzlichen Bilder nach Schritt (e).

15. System für eine automatisierte Detektion von verschluckten Kapseln auf Röntgenscannerbildern, umfassend:

einen Röntgenscanner;

15

eine Verarbeitungseinheit, die mit dem Röntgenscanner verbunden und konfiguriert ist um ein Bild von dem Röntgenscanner zu empfangen und zu verarbeiten;
wobei:

die Verarbeitungseinheit ein eingehendes Bild (520) einer Person, die durch den Scanner geht, erfasst;
die Verarbeitungseinheit zusätzliche Bilder (530) durch Durchführen von Transformationen des eingehenden Bilds erzeugt;
die Verarbeitungseinheit eine Position eines Magenbereichs (310) auf dem eingehenden und den zusätzlichen Bildern bestimmt;
die Verarbeitungseinheit segmentierte Regionen (420) des Magenbereichs (310) des eingehenden Bilds klassifiziert;
die Verarbeitungseinheit geometrische und Intensitätsmerkmale (740) zusammen mit rotatorisch invarianten periodischen Merkmalen von Fenstern auf dem Magenbereich (310) berechnet;
die Verarbeitungseinheit verdächtige Fenster (320, 330, 340) auf dem Magenbereich (310) detektiert;
die Verarbeitungseinheit aggregierte Merkmale für die Eigenschaften der verdächtigen Fenster (320, 330, 340) berechnet;
die Verarbeitungseinheit unter Verwendung des Modells für die Bilder, die keine verschluckten Kapseln enthalten, das eingehende Bild (440) basierend auf einem Schwellenwert für einen Ungleichartigkeitsfunktionswert, der durch die aggregierten Bildmerkmale definiert wird, klassifiziert, um Bilder zu detektieren, die verschluckte Kapseln aufweisen; und
die Verarbeitungseinheit den Bediener informiert, wenn die verschluckten Kapseln in dem Magenbereich (310) detektiert werden.

## Revendications

1. Procédé pour une détection automatisée de capsules avalées sur des images de scanner rayons X, le procédé comprenant :

   (a) l'acquisition d'une image arrivante (520) d'une personne qui passe au travers du scanner ;
   (b) la génération d'images additionnelles (530) en réalisant des transformations de l'image arrivante ;
   (c) la détermination d'une position d'une zone de l'estomac (310) sur l'image arrivante et sur les images additionnelles ;
   (d) la classification de régions segmentées (420) de la zone de l'estomac (310) de l'image arrivante ;
   (e) le calcul de caractéristiques géométriques et d'intensité (740) en association avec des caractéristiques périodiques invariantes en rotation pour des fenêtres sur la zone de l'estomac (310) ;
   (f) la détection de fenêtres suspectées (320, 330, 340) sur la zone de l'estomac (310) ;
   (g) le calcul de caractéristiques agrégées pour les propriétés des fenêtres suspectées (320, 330, 340) ;
   (h) l'utilisation du modèle pour les images qui ne contiennent pas de capsules avalées pour classifier l'image arrivante (440) en utilisant un seuil pour une fonction de dissemblance ; et
   (i) l'information de l'utilisateur du fait que l'image arrivante contient les capsules avalées sur la base de l'étape (h).

2. Procédé selon la revendication 1, dans lequel la détermination de la position de la zone de l'estomac (310) sur l'image arrivante et sur les images additionnelles inclut la détermination d'une zone supérieure du corps (210) sur l'image arrivante, et dans lequel l'information de l'utilisateur du fait que l'image arrivante contient les capsules avalées inclut le fait de déterminer si la fonction de dissemblance pour des caractéristiques agrégées pour l'image arrivante est supérieure ou égale au seuil.

3. Procédé selon la revendication 1, dans lequel des caractéristiques périodiques sont utilisées pour calculer les caractéristiques invariantes en rotation de telle sorte que la même périodicité horizontale, verticale ou en diagonale produise une entrée dans une seule propriété commune.

4. Procédé selon la revendication 1, comprenant en outre la segmentation de la zone de l'estomac (310) avant le calcul de caractéristiques géométriques et d'intensité en association avec des caractéristiques périodiques invariantes en rotation pour des fenêtres sur la zone de l'estomac (310) ; ou
comprenant en outre :

l'élaboration d'une carte d'intersections de fenêtres (1510) pour des fenêtres qui sont suspectées quant à la présence de capsules avalées ; et
le calcul de caractéristiques agrégées à partir de la carte d'intersections de fenêtres.

5. Procédé selon la revendication 1, dans lequel les images additionnelles qui sont générées à partir de l'image arrivante sont de quelconques images parmi :

des images logarithmiques ;
des images contrastées ; et
des images de carte de saillance.

6. Procédé selon la revendication 1, dans lequel les caractéristiques agrégées sont construites à partir des valeurs de marge pour séparer les images qui comportent des capsules avalées et les images sans capsules avalées ; dans lequel, en option :
les caractéristiques agrégées de zone de l'estomac sont de quelconques caractéristiques parmi :

une somme de marges par rapport à un hyper-plan de division ;
une valeur moyenne des marges par rapport à un hyper-plan de division ; et
un écart type des marges par rapport à un hyper-plan de division.

7. Procédé selon la revendication 5, dans lequel les caractéristiques agrégées de zone de l'estomac sont de quelconques caractéristiques parmi :

une valeur absolue de premier maximum de la marge par rapport à un hyper-plan de division ;
une valeur absolue de deuxième maximum de la marge par rapport à un hyper-plan de division ;
une valeur absolue de troisième maximum de la marge par rapport à un hyper-plan de division ;
une valeur absolue de quatrième maximum de la marge par rapport à un hyper-plan de division ;
une valeur absolue de cinquième maximum de la marge par rapport à un hyper-plan de division ;
une somme de marges de 5 maximums par rapport à un hyper-plan de division ; et
une valeur moyenne de marges de 5 maximums par rapport à un hyper-plan de division.

8. Procédé selon la revendication 1, dans lequel le modèle d'images sans capsules avalées est un modèle d'images à multiples variables qui est construit sur la base d'une distribution normale à multiples variables qui est décrite au moyen d'une matrice de covariance de jeu de données d'apprentissage.

9. Procédé selon la revendication 1, comprenant en outre le calcul de quelconques caractéristiques géométriques pour des zones segmentées :

une coordonnée verticale relative d'un centre d'une zone qui est calculée en tant que fraction d'une moyenne d'un nombre de rangées de tous les points de zone de la zone de l'estomac (310) sur une hauteur de l'estomac ;
une coordonnée horizontale relative d'un centre d'une zone qui est calculée en tant que distance depuis un centre de zone calculé jusqu'à un milieu de l'estomac divisée par une moitié d'une largeur de l'estomac ;
une longueur d'une zone suivant des directions horizontale et verticale ;
un nombre de pixels à l'intérieur d'une zone ; et
un nombre de pixels qui sont localisés sur une frontière d'une zone et d'un arrière-plan.

10. Procédé selon la revendication 1, dans lequel les caractéristiques géométriques sont de quelconques caractéristiques parmi :

des caractéristiques géométriques qui sont invariantes par rapport à des translations, à une mise à l'échelle et à des rotations ;
des caractéristiques géométriques qui sont invariantes par rapport à des transformations affines classiques ;
des caractéristiques géométriques de frontières de zone qui sont invariantes par rapport à des déplacements, à une mise à l'échelle et à des rotations.

11. Procédé selon la revendication 1, comprenant en outre le calcul de quelconques des caractéristiques d'intensité qui suivent :

les valeurs intégrale, moyenne et maximum de l'intensité, du gradient et du laplacien ;

des caractéristiques de texture d'image ; et

des caractéristiques qui sont utilisées pour une description de texture à des échelles différentes et dans des directions différentes ; ou

dans lequel une somme de caractéristiques périodiques invariantes en rotation sélectionnées est utilisée pour construire le moyen de classification (421).

12. Procédé selon la revendication 1, comprenant en outre la réduction de la dimensionnalité de données d'apprentissage en utilisent l'un des procédés de sélection de caractéristiques de l'état de l'art ; ou

comprenant en outre la génération du modèle pour les images qui ne contiennent pas de capsules avalées sur la base d'un jeu de données d'apprentissage ; ou

comprenant en outre la construction d'un moyen de classification (421) sur la base de caractéristiques géométriques et d'intensité en association avec des caractéristiques périodiques invariantes en rotation d'images.

13. Procédé selon la revendication 1, comprenant en outre l'information de l'utilisateur du fait que l'image arrivante ne contient pas de capsules avalées si une valeur de fonction de dissemblance pour les caractéristiques agrégées pour l'image arrivante courante est en-deçà du seuil ; ou

dans lequel les images additionnelles sont générées pour analyser un groupe plus important de caractéristiques d'image ; ou

comprenant en outre la suppression d'objets présentant un contraste élevé (430) de l'image de zone de l'estomac.

14. Procédé selon la revendication 1, comprenant en outre la sélection de paramètres pour un moyen de classification de fenêtres sur la base des caractéristiques de fenêtres pour de multiples images à partir d'une base de données d'apprentissage ; et

la construction du moyen de classification de fenêtres sur la base des paramètres ; ou

comprenant en outre le calcul de valeurs de marge des fenêtres suspectées, après l'étape (h) ; ou

comprenant en outre la soustraction d'objets présentant un contraste élevé (430) de la zone de l'estomac (310) de l'image arrivante et des images additionnelles, après l'étape (e).

15. Système pour une détection automatisée de capsules avalées sur des images de scanner rayons X, comprenant :

un scanner rayons X ;

une unité de traitement qui est connectée au scanner rayons X et qui est configurée pour recevoir et traiter une image en provenance du scanner rayons X ;

dans lequel :

l'unité de traitement acquiert une image arrivante (520) d'une personne qui passe au travers du scanner ;

l'unité de traitement génère des images additionnelles (530) en réalisant des transformations de l'image arrivante ;

l'unité de traitement détermine une position d'une zone de l'estomac (310) sur l'image arrivante et sur les images additionnelles ;

l'unité de traitement classifie des régions segmentées (420) de la zone de l'estomac (310) de l'image arrivante ;

l'unité de traitement calcule des caractéristiques géométriques et d'intensité (740) en association avec des caractéristiques périodiques invariantes en rotation de fenêtres sur la zone de l'estomac (310) ;

l'unité de traitement détecte des fenêtres suspectées (320, 330, 340) sur la zone de l'estomac (310) ;

l'unité de traitement calcule des caractéristiques agrégées pour les propriétés des fenêtres suspectées (320, 330, 340) ;

l'unité de traitement, en utilisant le modèle pour les images qui ne contiennent pas de capsules avalées, classifie l'image arrivante (440) sur la base d'un seuil pour une valeur de fonction de dissemblance qui est définie par les caractéristiques agrégées d'image pour détecter des images qui comportent les capsules avalées ; et

l'unité de traitement informe l'opérateur lorsque les capsules avalées sont détectées dans la zone de l'estomac (310).

FIG. 1

FIG. 2

FIG. 3

**FIG. 4**

Image Classifier —441

Windows Classifier —431

High-Contrast Objects Classifier —421

Classify Snapshot Image for Presence of Drugs —440

Search for Areas on the Image Suspicious for Presence of Drugs —430

Mark High-Contrast Objects —420

Prepare Data for Snapshot Image —410

```
┌─────────────────────────────┐
│   Receive Incoming Picture   │────── 520
└─────────────────────────────┘
              │
              ▼
┌─────────────────────────────┐
│   Prepare Additional Pictures │────── 530
└─────────────────────────────┘
              │
              ▼
┌─────────────────────────────┐
│      Segment the Body        │────── 540
└─────────────────────────────┘
              │
              ▼
┌─────────────────────────────┐
│   Determine the Upper Body   │────── 550
└─────────────────────────────┘
              │
              ▼
┌─────────────────────────────┐
│   Calculate Positioning of   │────── 570
│        Stomach Area          │
└─────────────────────────────┘
              │
              ▼
┌─────────────────────────────┐
│  Provide Stomach Area from   │
│   Incoming Picture and from  │────── 580
│ Additional Pictures for Further │
│        Processing            │
└─────────────────────────────┘
```

**FIG. 5**

```
┌─────────────────────────────┐
│  Segment Areas of Image Base │────── 610
└─────────────────────────────┘
              │
              ▼
┌─────────────────────────────┐
│         Filter areas         │────── 620
└─────────────────────────────┘
              │
              ▼
┌─────────────────────────────┐
│    Mark Areas Manually by    │────── 630
│           Expert             │
└─────────────────────────────┘
              │
              ▼
┌─────────────────────────────┐
│   Calculate Features for Areas│────── 640
└─────────────────────────────┘
              │
              ▼
┌─────────────────────────────┐
│        Select Features       │────── 650
└─────────────────────────────┘
              │
              ▼
┌─────────────────────────────┐
│   Select Classifier Parameters│────── 660
└─────────────────────────────┘
              │
              ▼
┌─────────────────────────────┐
│        Build Classifier      │────── 670
└─────────────────────────────┘
```

## FIG. 6

EP 3 323 002 B1

```
┌─────────────────────────────────────┐
│                                     │───── 710
│        Segment Areas of Image       │
│                                     │
└─────────────────────────────────────┘
                    │
                    ▼
┌─────────────────────────────────────┐
│                                     │───── 720
│            Filter Areas             │
│                                     │
└─────────────────────────────────────┘
                    │
                    ▼
┌─────────────────────────────────────┐
│                                     │───── 740
│   Calculate Selected Features for Areas │
│                                     │
└─────────────────────────────────────┘
                    │
                    ▼
┌─────────────────────────────────────┐
│                                     │───── 750
│       Classify High-Contrast Areas  │
│                                     │
└─────────────────────────────────────┘
```

# FIG. 7

**FIG. 8**

810

820

830

**FIG. 9**

Abdomen region

```
┌─────────────────────────────┐
│ Remove High-Contrast Objects from │──── 1010
│         Stomach Area          │
└─────────────────────────────┘
              │
              ▼
┌─────────────────────────────┐
│   Mark Windows Manually by an  │──── 1020
│           Expert            │
└─────────────────────────────┘
              │
              ▼
┌─────────────────────────────┐
│  Calculate Features for Windows │──── 1030
└─────────────────────────────┘
              │
              ▼
┌─────────────────────────────┐
│                             │
│      Select Best Features     │──── 1040
│                             │
└─────────────────────────────┘
              │
              ▼
┌─────────────────────────────┐
│  Select Parameters for Classifier │──── 1050
└─────────────────────────────┘
              │
              ▼
┌─────────────────────────────┐
│       Build Classifier       │──── 1060
└─────────────────────────────┘
```

**FIG. 10**

Remove High-Contrast Objects from Stomach Area —— 1110

Calculate Selected Features for Windows —— 1120

Calculate Parameters for Windows by Classifier —— 1130

# FIG. 11

FIG. 12

EP 3 323 002 B1

FIG. 13

EP 3 323 002 B1

EP 3 323 002 B1

1410

1420

1430

f

| f(1,1) | f(1,2) |
|--------|--------|
| f(2,1) | f(2,2) |

fRI

| | |
|---|---|
| 1 | f(1,1) |
| 2 | f(2,1)+ f(1,2)+c1 f(2,2) |
| 3 | c2 f(2,2) |

fRISUM

| | |
|-----|----------------------|
| 1,2 | fRI(1) + fRI(2) |
| 1,3 | fRI(1) + fRI(2)+ fRI(3) |
| 2,3 | fRI(2)+ fRI(3) |

**FIG. 14**

Build Windows' Intersections Map for Windows Suspected for Presence of Drugs ⎯ 1510

Calculate Features from Windows' Intersections Map ⎯ 1520

Calculate Features from Margins of Suspected Windows ⎯ 1530

Select Features ⎯ 1540

Construct Model for Images without Drugs ⎯ 1550

Select probability threshold value for dividing the images with drugs and without them ⎯ 1560

Construct Transformation Function ⎯ 1570

**FIG. 15**

Built Windows' Intersections Map for Windows Suspected for Presence of Drugs ⎯⎯ 1610

↓

Calculate Features from Windows' Intersections Map ⎯⎯ 1620

↓

Calculate Features from Margins of Suspected Windows ⎯⎯ 1630

↓

Classify Picture ⎯⎯ 1640

## FIG. 16

FIG. 17

**Normalized probability histogram**

Images with drugs

Images without drugs

Normalized probability $f(x)/f_{max}$

**FIG. 18**

FIG. 19

**Dissimilarity histogram**

Images without drugs

Images with drugs

Dissimilarity with normal image (%)

**FIG. 20**

**REFERENCES CITED IN THE DESCRIPTION**

**Patent documents cited in the description**

- US 8437556 B
- US 20150010128 A
- US 8774461 B
- CN 101034071
- US 20150010128 A1, Drouin, S., R. Poulin, L. Perron, and D. Gudmundson

- US 8437556 B1, Saisan, P.
- US 8774460 B2, Sun, Y., X. Wang, L. Wang, Y. Yi, and M. Chen
- US 8774461 B2, Vaidya, N. M.

**Non-patent literature cited in the description**

- **MERY, D.** Automated Detection of Welding Discontinuities without Segmentation. *Materials Evaluation,* 2011, 657-663
- **HU.** Visual pattern recognition by moment invariants. *Information Theory, IRE Transactions on,* 1962, vol. 8 (2), 179-187
- **FLUSSER.** Pattern recognition by affine moment invariants. *Pattern Recognition,* 1993, vol. 26 (1), 167-174
- **GUPTA.** Contour sequence moments for the classification of closed planar shapes. *Pattern Recognition,* 1987, vol. 20 (3), 267-272
- **HARALICK.** Textural Features for Image Classification. *Systems, Man and Cybernetics, IEEE Transactions on,* 1973, vol. SMC-3 (6), 610-621
- **KUMAR, A. ; G. K. H. PANG.** Defect detection in textured materials using Gabor filters. *Industry Applications, IEEE Transactions on,* 2002, vol. 38 (2), 425-440
- **BISHOP, C. M.** Pattern Recognition and Machine Learning. Springer, 2006
- **CORTES, C. ; V. VAPNIK.** Support-vector networks. *Mach Learn,* 1995, vol. 20 (3), 273-297
- **DUTA, N. ; A. K. JAIN ; M. P. DUBUISSON-JOLLY.** Automatic construction of 2D shape models. *Pattern Analysis and Machine Intelligence, IEEE Transactions on,* 2001, vol. 23 (5), 433-446
- **FLUSSER, J. ; T. SUK.** Pattern recognition by affine moment invariants. *Pattern Recognition,* 1993, vol. 26 (1), 167-174
- **GUPTA, L. ; M. D. SRINATH.** Contour sequence moments for the classification of closed planar shapes. *Pattern Recognition,* 1987, vol. 20 (3), 267-272
- **HARALICK, R. M. ; K. SHANMUGAM ; I. H. DINSTEIN.** Textural Features for Image Classification. *Systems, Man and Cybernetics, IEEE Transactions on,* 1973, vol. SMC-3 (6), 610-621

- **HU, M.-K.** Visual pattern recognition by moment invariants. *Information Theory, IRE Transactions on,* 1962, vol. 8 (2), 179-187
- **JAIN, A. K. ; R. P. W. DUIN ; M. JIANCHANG.** Statistical pattern recognition: a review. *Pattern Analysis and Machine Intelligence, IEEE Transactions on,* 2000, vol. 22 (1), 4-37
- **LAURIKKALA, J. ; M. JUHOLA ; E. KENTALA.** Informal Identification of Outliers in Medical Data. *5th International Workshopon Intelligent Data Analysis in Medicine and Pharmacology,* 2000
- **LEHMANN, L. A. ; R. E. ALVAREZ ; A. MACOVSKI ; W. R. BRODY ; N. J. PELC, S. J. ; RIEDERER ; A. L. HALL.** Generalized image combinations in dual KVP digital radiography. *Medical Physics,* 1981, vol. 8 (5), 659-667
- **MERY, D. ; M. A. BERTI.** Automatic detection of welding defects using texture features. *Insight - Non-Destructive Testing and Condition Monitoring,* 2003, vol. 45 (10), 676-681
- **MERY, D. ; R. R. DA SILVA ; L. P. CALOBA ; J. M. A. REBELLO.** Pattern recognition in the automatic inspection of aluminium castings. *Insight - Non-Destructive Testing and Condition Monitoring,* 2003, vol. 45 (7), 475-483
- **MONTABONE, S. ; A. SOTO.** Human detection using a mobile platform and novel features derived from a visual saliency mechanism. *Image and Vision Computing,* 2010, vol. 28 (3), 391-402
- **OJALA, T. ; M. PIETIKAINEN ; T. MAENPAA.** Multiresolution gray-scale and rotation invariant texture classification with local binary patterns. *Pattern Analysis and Machine Intelligence, IEEE Transactions on,* 2002, vol. 24 (7), 971-987
- **YU, Z. ; C. BAJAJ.** A fast and adaptive method for image contrast enhancement. *Image Processing, 2004. ICIP '04. 2004 International Conference on,* 2004

- Contrast Limited Adaptive Histograph Equalization. **ZUIDERVELD, K.** Graphic Gems IV. Academic Press Professional, 1994, 474-485